Europäisches Patentamt

European Patent Office

Office européen des brevets

(11) Publication number: **0 342 915**
A2

# EUROPEAN PATENT APPLICATION

(21) Application number: 89304917.1

(22) Date of filing: 16.05.89

(51) Int. Cl.⁴: **B60J 5/04**

(30) Priority: 17.05.88 GB 8811637

(43) Date of publication of application:
23.11.89 Bulletin 89/47

(84) Designated Contracting States:
AT BE CH DE ES FR GB GR IT LI LU NL SE

(71) Applicant: **GROUP LOTUS PLC**
**Hethel**
**Norwich Norfolk NR14 8EZ(GB)**

(72) Inventor: **Stevens, Peter Charles**
**14 Mile End Road**
**Norwich Norfolk NR4 7QY(GB)**

(74) Representative: **Jones, Ian et al**
**POLLAK MERCER & TENCH High Holborn**
**House 52-54 High Holborn**
**London WC1V 6RY(GB)**

(54) **Door system.**

(57) A vehicle having front and rear seats has a side door system comprising a front door (10) which can be pivoted open about its forward edge and an abutting rear door (11) which is movable outwardly and then rearwardly as a consequence of the front door movement, preferably after a predetermined front door movement. The doors can be mechanically linked or the rear door can be moved electrically or hydraulically. Reinforcement beams in the two doors are releasably coupled together in the closed position.

FIG.1.

EP 0 342 915 A2

## DOOR SYSTEM

The invention relates to a door structure or system particularly appropriate to a passenger carrying road vehicle.

In passenger road vehicles having besides a driver's and a front passenger's seat, rear seats to which access is had by a single door on each side of the vehicle, it is necessary to make each door of considerable length, with the undesirable results that the door is heavy and extends a great distance outwardly from the vehicle when open. The invention is concerned with the provision of a door structure by which these difficulties can be alleviated.

In accordance with the invention, there is provided a vehicle door structure comprising a first door element selectively movable from a closed position to provide an aperture for ingress to and egress from the vehicle, and a second door element movable from a closed position so as to enlarge the aperture in response to the movement of the first door element.

The first door element can be pivoted at its forward edge to the body structure with the second door element mounted for rearward sliding movement, preferably by an electrical or hydraulic drive, during the later part of the opening movement of the first element, for example, during only the last third. The second door element can be smaller than the first, but the first can be shorter and therefore lighter than a single door associated with the same effective aperture. Alternatively, a wider access aperture can be provided for a given weight and outward movement of a pivoted front door, to allow easier access to the rear seats. The aperture to be spanned by the two door elements can thus be considerable and for safety reasons each is preferably provided with a bar extending lengthwise, the bars have interfitting formations at their adjoining edges so as to provide much of the strength properties of a single bar.

The invention accordingly provides a door structure comprising two door elements having engaging adjacent edges in the closed positions, reinforcement beams or bars in the elements extending to the edges, and means for interlocking the two beams at the edges. The two door elements are preferably arranged to move co-operatively as described above.

The invention is further described below, by way of example with reference to the accompanying drawing, in which:

Figure 1 is a partial schematic side view of a vehicle incorporating a door structure in accordance with the invention, the door structure being in the closed position;

Figure 2 is a view similar to that of Figure 1, but showing the door structure in the open position; and

Figure 3 is a perspective interior view of one door element of the door structure of Figures 1 and 2, on a larger scale.

The illustrated vehicle 1 is of the two-plus-two type, having a cabin with a driver's and a passenger's seat side-by-side at the front and two passenger seats at the rear. Access to the front and rear seats is obtained by way of an aperture in each of the side walls of the vehicle. As shown, the access aperture 2 at the lefthand side of the vehicle extends rearwardly from the windscreen 4 and front wheel arch 5 to a position forward of the rear wheel arch 6, and in the vertical direction it extends between the roof 7 and a door sill 9. Except when egress or ingress is required, the aperture 2 is closed by the door structure of the invention which comprises a front door element 10 and a rear door element 11 having adjacent upright edges in engagement.

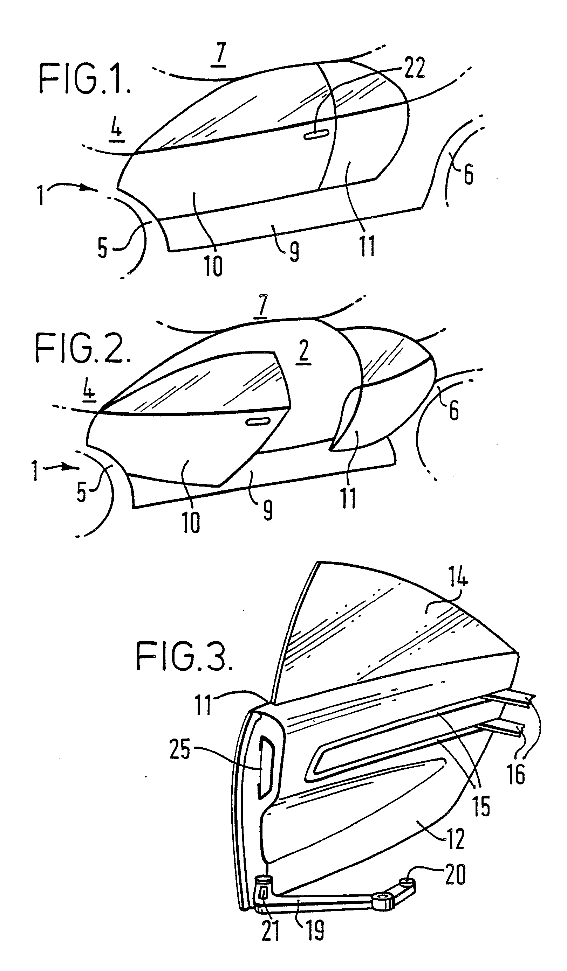

As best appears from Figure 3, the rear door element 11 comprises a lower double-walled panel portion 12 with glazing 14 above it. The door element 10 is of generally similar construction, in comprising a lower double-walled panel portion with glazing above it. In either door element, the glazing may or may not be framed, and is preferably retractable into the underlying panel portions.

The leading edge of the front door element 10 is mounted to the vehicle by a hinge or hinges for pivotation about an upright axis, so that the door can be pivoted manually away from the vehicle from the closed position shown in Figure 1 to the open position shown in Figure 2. The rear door element 11 is however guided for sliding movement from its closed position, shown in Figure 1, in which it extends in the plane of the vehicle sidewall, or continues the sidewall shape if this is not planar, to its open position in which it extends outside and parallel to the sidewall, as shown in Figure 2. In its open position the door element 11 is substantially clear of the aperture 2, leaving this unobstructed for entry to and exit from the vehicle seats. The sliding movement of the door element 11 from the closed position begins with a bodily outward movement sufficient to allow a subsequent rearward sliding movement parallel to the side wall.

To permit this opening movement, and the corresponding return movement to the closed position, the door element 11 is provided near the top of its lower panel portion 12 with a vertically spaced pair of generally horizontal guide tracks 15, in each of which there is slidably but non-releasably received the free end of a respective support element 16 projecting laterally outwardly from the vehicle body. The guide tracks 15 have a curvature in the horizontal plane, within the thickness of the panel portion 12 to provide for the initial laterally outward movement on opening. The rear door element 11 is additionally connected to the vehicle body by a two-armed link 19 which forms part of a mechanical linkage operatively connecting the two door elements and which extends from a fixed pivot position 20 on the body or chassis and a position 21 at the lower forward edge of the door element.

In the closed position of the door structure shown in Figure 1, the front and rear door elements 10 and 11 form a flush continuation of the vehicle sidewall, with the rear edge of the forward door element in abutment with the front edge of the rear door element. The front door element 10 carries a latch operated internally and externally by a handle 22 by which it is releasably latched to the rear door element. To provide adequate strength along the side of the vehicle above the level of the sill 9, each of the door elements incorporates a side bar extending along it at the top of the panelled portion. At the adjacent door element edges, the bars are provided with interlocking formations, of which one formation 25 is seen in Figure 3, by which the two bars are connected together in the closed position, so as to provide substantially the protective strength of a unitary beam.

When it is desired to open the door elements, the latch is released, by means of the handle 22 if opening is from the outside, so the front door element 10 can be pivoted outwardly, as shown in Figure 2. The rear door element 11 can now move to its open position, by sliding movement in the guide tracks 15 of the support elements 16 and by operation of the link 19. Preferably, the opening of the rear door element 11 is co-ordinated with that of the front element 10, so that the former remains stationary until the latter has turned outwardly through about two-thirds of its maximum permitted angular movement, as defined by stops associated with the hinge.

The two door elements may be linked mechanically, as shown, so that the rear door element movement is effected by the movement of the front door element, but the rear door element 11 may be driven electrically or hydraulically, so as not to require a direct manual input. The electrical or hydraulic force can be applied in response to the sensing by an appropriate sensor operatively associated with the front door element of the movement of the front door through the first two-thirds of its angular opening movement.

Closure of the door structure from the open position to that of Figure 1 is of course effected precisely in the reverse way. The rear element 11 reaches its closed position well before the front element 10 has completed its return movement, so that the front element can latch to the rear element in just the same way as to a fixed pillar of the vehicle body.

As will be understood, the invention can be embodied in a variety of ways other than as specifically illustrated and described.

## Claims

1. A door system comprising first and second door members having closed positions in which the door members together close an aperture, the first door member being selectively movable from the closed to an open position, and means effecting movement of the second door member from the closed position to an open position in response to the opening movement of the first door member.

2. A door system as claimed in claim 1 wherein the aperture is in a vehicle sidewall and wherein the first and second door members comprise front and rear door members.

3. A door system comprising first and second door members mounted for movement between a closed position, in which the door members close an aperture and have edges in engagement, and an open position, a reinforcement member in each door member, the reinforcement members extending to the engageable edges of the door members, and connecting means releasably connecting together the reinforcement members in the closed position of the door members.

4. A door system as claimed in claim 3 wherein the aperture is an access aperture in a road vehicle sidewall, the door members comprise front and rear vehicle door members each having a lower panelled portion and an upper glazed portion, and the reinforcement members comprise beams extending horizontally in the upper region of the panelled portions.

5. A door system as claimed in claim 4 comprising drive means coupling together the first and second doors whereby opening movement of the first door results in opening movement of the second door.

6. A door system as claimed in claim 1, 2 or 5 wherein the second door member is movable from the closed position only after a predetermined opening movement of the first door member.

7. A door system as claimed in claim 2, 5 or 6 wherein the first door member is hinged to the vehicle sidewall at the forward edge of the door member and the second door member is movable outwardly and rearwardly to an open position alongside the vehicle sidewall.

8. A door system as claimed in claim 7 wherein the second door member is movable from the closed position only after the first door member has pivoted through about two-thirds of a maximum opening movement.

9. A door system as claimed in claim 7 or 8 wherein the second door member is mounted by generally horizontally extending guide track means formed internally of the door member, and support means secured to the vehicle and slidably received in the guide track means, the guide track means having a curvature generally in the horizontal plane to provide the movement outwardly from the closed position.

10. A door system as claimed in any one of claims 1, 2 and 5-9 wherein the movement of the second door member is effected by a mechanical linkage operative between the first and second door members.

11. A door system as claimed in any one of claims 1, 2 and 5-9 wherein the movement of the second door member is effected by a hydraulic actuator or an electric motor in response to sensing by a sensor of movement of the first door member.

FIG.1.

FIG.2.

FIG.3.